Europäisches Patentamt

European Patent Office

Office européen des brevets

(19)

(11) Numéro de publication: **0 132 475 B1**

(12) **FASCICULE DE BREVET EUROPEEN**

(45) Date de publication de fascicule du brevet:
**17.04.91**

(51) Int. Cl.⁵: **A47J 39/02, A47B 31/02**

(21) Numéro de dépôt: **83401546.3**

(22) Date de dépôt: **27.07.83**

(54) **Armoires et chariots chauffants à usage des collectivités et du public.**

(43) Date de publication de la demande:
**13.02.85 Bulletin 85/07**

(45) Mention de la délivrance du brevet:
**17.04.91 Bulletin 91/16**

(84) Etats contractants désignés:
**AT BE CH DE FR GB IT LI NL SE**

(56) Documents cités:
CH-A- 269 372     DE-A- 2 229 939
FR-A- 1 037 872   FR-A- 1 110 890
FR-A- 1 257 778   FR-A- 1 299 690
FR-A- 1 562 555   FR-A- 2 315 062
GB-A- 442 390    GB-A- 1 203 690
US-A- 2 926 655   US-A- 3 038 986
US-A- 3 283 125   US-A- 3 340 380
US-A- 4 189 196

(73) Titulaire: **Laurent, Jean-Hubert**
**1 Bis rue du Printemps**
**F-78230 Le Pecq(FR)**

(72) Inventeur: **Laurent, Jean-Hubert**
**1 Bis rue du Printemps**
**F-78230 Le Pecq(FR)**

Rank Xerox (UK) Business Services

## Description

L'invention concerne une enceinte de régénération thermique conforme au préambule de la revendication 1.

Une telle enceinte de régénération est connue du brevet français 1.423 691 dans laquelle enceinte il est procédé à la régénération de la chaleur des mets posés sur des étagères, en les faisant pénétrer dans un capot équipé de résistances blindées ou tubes à quartz qui s'intercalent entre les étagères. Le maintien froid préalable et chaud ensuite nécessitent d'aléatoires couvercles isolants.

Inversement, le brevet français 2 315 062 chauffe l'enceinte calorifugée par air pulsé inclus dans le chariot, et qui en même temps accumule de la chaleur dans des blocs de matière dense et assure une liaison chaude jusqu'au consommateur. Un compartiment mitoyen non calorifugée reçoit les plateaux garnis de hors-d'oeuvres et desserts.

Par contre le poids du système régénérateur et son prix élevé incorporés à un seul chariot représentent des inconvénients importants malgré ses avantages de chaleur douce, nettoyage et manutention facilités par les étagères coulissantes amovibles.
La présente invention a pour but de remédier à ces inconvénients.

Les objectifs de l'invention sont atteints par une enceinte de régénération telle que définie dans la revendication 1.

L'invention est exposée ci-après plus en détail à l'aide de dessins représentant les divers modes d'exécution.

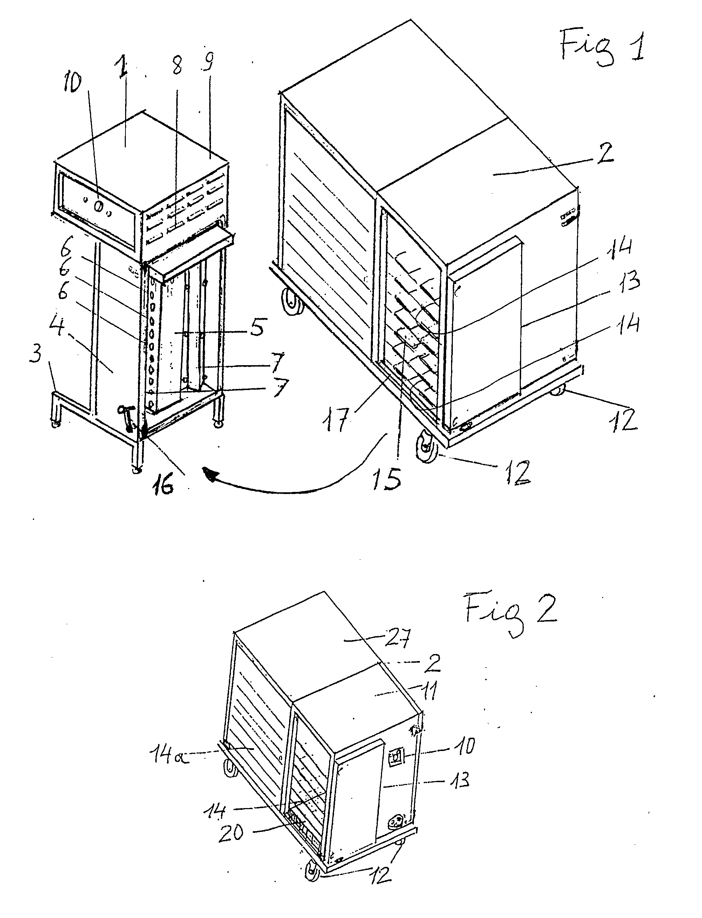

La figure 1 représente en perspective le régénérateur et un chariot à un seul compartiment.

La figure 2 montre en perspective un chariot à 2 compartiments.

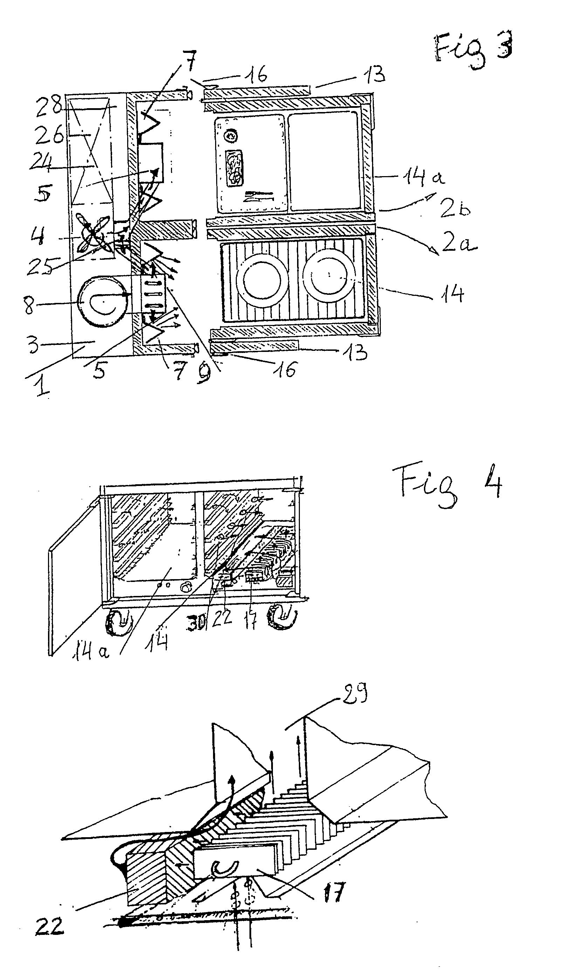

La figure 3 montre en plan schématique un régénérateur couplé avec un régénérateur de froid face à deux compartiments froid et chaud.

La figure 4 représente en perspective un chariot et son système de chauffage à accumulation par résistances en vue générale et détaillée.

Les figures représentent les différent éléments d'une enceinte de régénération à usage des collectivités et du public comprenant essentiellement une armoire 1 avec son régénérateur par convection forcée et un générateur d'air froid 24 monté sur le même caisson 4 et loquets d'arrimage d'un chariot 2 à un seul compartiment et 27 à deux compartiments, ainsi que deux vues du chauffage par résistances 17 des compartiments nécessitant un maintien chaud par accumulation 22;
conformément à la présente invention, les éléments constitutifs se présentent en deux éléments et leurs diverses versions décrits comme suit :

- un régénérateur par convection forcée composé d'une armoire sur un piétement 3 portant un caisson 4 en façade duquel est montée la gaine 5 dontles ouvertures 6 projettent l'air sur les déflecteurs 7 après passage au travers de la turbine 8 qui le pulse sur les résistantes chauffantes 9 selon une régulation 10 et un chariot 2 chargé des mets réfrigérés sur étagères 14 composé de l'armoire calorifugée 11 montée sur roues 12 la porte 13 rabattue sur un coté, permettant la mise en place du régénérateur 1 face à la partie ouverte 15 de l'armoire 11 arrimés au moyen des loquets 16 les blocs accumulateurs de chaleur 22 étant chauffés par résistances 17 Durant ce temps, un manchon supérieur 23 sortant d'un boitier en haut du régénérateur 1 aspire l'air refroidi recyclé par la turbine 8.

Pour ce qui est de l'armoire 1, elle comporte l'adjonction sur le caisson 4 d'un groupe réfrigérant à compresseur avec évaporateur à ailettes assurant le maintien froid des aliments en attente de régénération, l'évaporateur 26 étant disposé à côté de la turbine 8 aspirant l'air froid par un manchon 25 à clapet et le dirigeant par la gaine 5 vers le compartiment 2 du chariot 11 arrimé à l'armoire avant commutation de la réfrigération vers la génération de chaleur.

Dans un mode d'exécution préféré de l'invention, on voit, en plus du compartiment de régénération 11, un compartiment 27 destiné aux aliments devant être consommés froid nécessitant un évaporateur ventilé 28 sur un panneau du caisson 4 du régénérateur 1 face au compartiment 27;

On voit ici en détail une cheminée 29 percée d'orifices répartissant la chaleur accumulée par les blocs 22 dans le compartiment 11.

## Revendications

1. Enceinte de régénération thermique comportant d'une part un régénérateur sur piétement (3) muni d'une turbine (8) pulsant de l'air dans une gaine (5) verticale soufflant par des trous (6) latéraux sur des déflecteurs (7) obliques et d'autre part un chariot (2) comportant des roues (12) apte à recevoir des plats réfrigérés dont la chaleur est à régénérer, les déflecteurs (7) répartissant les flux d'air vers ledit chariot,des blocs accumulateurs (22) chauffés par des résistances (17) assurant le maintien chaud des mets étant prévus ainsi que des résistances (9) pour chauffer l'air pulsé, caractérisée en ce que le régénérateur comporte un caisson (4) en façade duquel est montée la gaine (5) ainsi que les déflecteurs (7), les résistances (9) étant disposées à l'intérieur de la gaine, la gaine (5) étant surmontée d'un manchon (23) supérieur placé en saillie sur le caisson (4),ledit manchon étant apte à aspirer l'air refroidi recyclé par la turbine (8),ledit caisson étant muni sur ses parois latérales de loquets (16) et en ce que le chariot (2) est conformé en armoire calorifugée munie d'étagères (14) apte à recevoir les mets réfigérés et comporte une ouverture (15) munie d'une porte (13) susceptible d'être rabattue sur le côté de l'armoire, autorisant, dans cette position de la porte, la mise en regard de ladite ouverture (15) et de la façade du caisson (4) du régénérateur munie de la gaine (5), des déflecteurs (7) et du manchon supérieur (23) ainsi que l'arrimage du chariot (2) sur ladite façade du régénérateur au moyen des loquets (16) de sorte que l'armoire et le chariot forment une enceinte fermée, les accumulateurs (22) et leurs résistances (17) de chauffage étant disposés sur le chariot.

2. Enceinte selon la revendication 1 caractérisée en ce qu'elle comporte l'adjonction sur le caisson(4)d'un groupe réfrigérant (24) assurant le maintien froid des aliments en attente de régénération avec évaporateur (26) à coté de la turbine (8) aspirant l'air froid par un manchon (25)à clapet et le dirigeant par la gaine (5) vers le compartiment (2) du chariot (11) arrimé à l'armoire.

3. Enceinte selon la revendication 1 caractérisé en ce que le chariot (2) comporte en plus du compartiment de régénération (11) un compartiment (27) destiné aux aliments devant être consommés froids nécessitant un évaporateur ventilé (28) sur un panneau du caisson (4) (4) du régénérateur (1) ,face au compartiment (27).

4. Enceinte selon la revendication 1 caractérisé en ce que le chariot (2) comporte une ou plusiers cheminées (29) percées d'orifices répartissant la chaleur accumulée par les blocs (22) dans le compartiment (11).

## Claims

1. Thermal regeneration enclosure comprising on the one hand a regenerator on underframe (3) equipped with a turbine (8) pulsing air into a vertical casing (5) and blowing through side holes (6) onto oblique baffles (7) and on the other hand a trolley (2) comprising wheels (12), able to accept refrigerated dishes whose heat is to be regenerated, baffles (7) distributing the air flow towards the said trolley, storage blocks (22) heated by resistors (17) ensuring that the dishes are kept hot, resistors (9) also being provided to heat the pulsed air, characterised in that the regenerator comprises a caisson (4) on the front of which is mounted casing (5) and baffles (7), resistors (9) being located inside the casing, casing (5) being mounted under an upper sleeve tube (23) attached onto the caisson (4), the said sleeve tube being able to draw in the cooled air recyled by turbine (8), the said caisson being equipped on its side walls with catches (16) and in that trolley (2) is in the form of a lagged trolley equipped with shelves (14) able to accept the refrigerated dishes and comprises an opening (15) equipped with a door (13) capable of being folded back onto the side of the cabinet, allowing, in this door position, viewing of the said opening (15) and front of regenerator caisson (4) equipped with casing (5), baffles (7) and upper sleeve tube (23) as well as the securing of trolley (2) on the said regenerator front by means of catches (16) such that the cabinet and trolley form a closed enclosure, storage blocks (22) and their heating resistors (17) being located in the trolley.

2. Enclosure according to claim 1 characterised in that it includes the addition on caisson (4) of a cooling unit (24) ensuring that the foods awaiting regeneration are kept cold, with evaporator (26) next to turbine (8) drawing in the cold air through a valve controlled sleeve tube (25) and directing it through casing (5) towards compartment (2) of trolley (11) secured to the cabinet.

3. Enclosure according to claim 1 characterised in that trolley (2) includes in addition to regeneration compartment (11) a compartment (27) intended for foods to be consumed cold requiring a ventilated evaporator (28) on one panel of caisson (4) of regenerator (1), facing compartment (27).

4. Enclosure according to claim 1 characterised in that trolley (2) includes one or several ducts (29) containing orifices to distribute the heat stored by blocks (22) in compartment (11).

## Ansprüche

1. Raum zum Aufwärmen, der einerseits ein Aufwärmgerät auf Fußgestell (3) umfaßt, das mit einer Turbine (8) ausgestattet ist, die Luft in einem vertikalen Schlauch (5) pulsiert und über seitlich angebrachte Löcher (6) auf schräge Ablenkbleche (7) bläst, andererseits einen Karren (2) mit Rädern (12) zur Aufnahme von gekühlten Gerichten, die aufgewärmt werden sollen, wobei die Ablenkbleche (7) den Luftstrom auf besagten Karren leiten und durch Heizwiderstände (17) geheizte Speicherblöcke (22) für das Warmhalten der Speisen vorgesehen sind, und mit Heizwiderständen (9) zum Heizen der pulsierenden Luft, dadurch gekennzeichnet, daß das Aufwärmgerät einen Kasten (4) enthält, auf dessen Frontseite der Schlauch (5) und die Ablenkbleche (7) angebracht sind. Die Heizwiderstände sind im Schlauch angebracht; der Schlauch (5) wird durch ein Rohr (23) gekrönt, das über den Kasten (4) hinaussteht, wobei besagtes Rohr sich zum Ansaugen der von der Turbine (8) umgewälzten gekühlten Luft eignet. Besagter Kasten ist auf den Seitenwänden mit Klinken (16) ausgestattet. Anspruch bestehend darin, daß der Karren (2) als wärmeisolierter, mit Fachböden (14) zur Aufnahme der Gerichte ausgestatteter Schrank ausgelegt ist, der eine mit einer auf die Schrankseite umklappbaren Tür (13) versehene Öffnung aufweist, wodurch bei dieser Stellung der Tür die besagte Öffnung (15) und die Frontseite des Kastens (4) des mit dem Schlauch (5), den Ablenkblechen (7) und dem obenliegenden Rohr (23) ausgestatteten Aufwärmsystems gegenübergestellt werden können sowie der Karren (2) an der besagten Frontseite des Aufwärmsystems mit Hilfe von Klinken (16) so angekoppelt werden kann, daß Schrank und Karren einen geschlossenen Raum bilden, wobei die Heizspeicherblöcke (22) und die zugehörigen Heizwiderstände (17) auf dem Karren angebracht sind.

2. Raum gemäß Anspruch 1, dadurch gekennzeichnet, daß sie die Hinzufügung eines Kühlaggregats (24) zum Kasten (4) beinhaltet, wodurch die Nahrungsmittel vor dem Aufwärmen kühl gehalten werden können, mit einem Verdampfer (26) neben der die Kaltluft über ein mit Klappe versehenes Rohr (25) ansaugenden Turbine (8), die die Luft durch den Schlauch (5) zum Fach (2) des mit dem Schrank verbundenen Karrens (11) leitet.

3. Raum gemäß Anspruch 1, dadurch gekennzeichnet, daß der Karren (2) zusätzlich zu dem Aufwärmfach (11) ein Fach (27) enthält, das für die Aufnahme von kalten Speisen bestimmt ist und einen belüfteten Verdampfer (28) auf einer wandplatte des Kastens (4) des Aufwärmsystems (1) gegenüber dem Fach (27) benötigt.

4. Raum gemäß Anspruch 1, dadurch gekennzeichnet, daß der Karren (2) einen oder mehrere Schächte (29) mit aufgebohrten Öffnungen zur Verteilung der in den Blöcken (22) gespeicherten Wärme in Fach (11) enthält.

Fig 1

Fig 2

Fig 3

Fig 4